(19) **Europäisches Patentamt**
**European Patent Office**
**Office européen des brevets**

(11) **EP 3 110 045 A1**

(12) **EUROPEAN PATENT APPLICATION**
published in accordance with Art. 153(4) EPC

(43) Date of publication:
**28.12.2016 Bulletin 2016/52**

(51) Int Cl.:
**H04B 17/00** (2015.01)  **H04L 5/14** (2006.01)

(21) Application number: **14886145.3**

(22) Date of filing: **18.03.2014**

(86) International application number:
**PCT/CN2014/073575**

(87) International publication number:
**WO 2015/139192 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd**
**Shenzhen, Guangdong 518129 (CN)**

(72) Inventors:
• **ZHANG, Lei**
**Shenzhen**
**Guangdong 518129 (CN)**

• **RONG, Lu**
**Shenzhen**
**Guangdong 518129 (CN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **METHOD OF CORRECTING RECIPROCITY BETWEEN UES, AND DEVICE AND COMMUNICATION SYSTEM**

(57) The present invention discloses an method for reciprocity calibration between UEs, an apparatus, and a communications system, which relate to the communications field, and can calibrate a reciprocity error between UEs, thereby ensuring performance of the communications system. The method includes: sending, by a communication device, a first reference signal to a first user equipment UE, so that the first UE estimates first channel information of a first channel between the first UE and the communication device according to the first reference signal; receiving the first channel information fed back by the first UE; receiving a second reference signal sent by the first UE; estimating second channel information of a second channel between the communication device and the first UE according to the second reference signal; and performing reciprocity calibration according to the first channel information and the second channel information.

FIG. 1

## Description

### TECHNICAL FIELD

The present invention relates to the communications field, and in particular, to an method, an apparatus, and a communications system of reciprocity calibration between UEs.

### BACKGROUND

Currently, channel reciprocity of an LTE (Long Term Evolution, Long Term Evolution) TDD (Time Division Duplexing, time division duplex) system is better than that of an FDD (Frequency Division Duplex, frequency division duplex) system, and in a TDD system, an uplink channel and a downlink channel use a same frequency band. Therefore, in the TDD system, the downlink channel can be estimated according to the uplink channel, so as to improve transmission performance of the downlink channel, so that the TDD system is widely applied. However, in an actual TDD system, antennas of a base station and a user end each have an independent receive link and transmit link, and channel reciprocity is applicable only to a space propagation channel. Therefore, absolute channel reciprocity does not exist in the actual TDD system. In addition, a slight reciprocity error of uplink and downlink channels may cause an apparent change in performance of acommunications system. Therefore, reciprocity calibration needs to be performed on an antenna before a characteristic of TDD channel reciprocity is used.

However, when performing reciprocity calibration on the antenna, the inventor finds that, in the prior art, a reciprocity error of an antenna on a base station side can be generally resolved by using self-calibration of the antenna of the base station. Currently, however, a reciprocity error problem of an antenna between UEs on a UE (User Equipment, user equipment) side does not draw enough attention due to a limitation on an application scenario, and therefore is not effectively resolved yet.

### SUMMARY

Embodiments of the present invention provide an method, an apparatus of reciprocity calibration between UEs, and a communications system, which can calibrate an reciprocity error between UEs, thereby ensuring performance of the communications system.

To achieve the foregoing objective, the following technical solutions are provided in the embodiments of the present invention:

According to a first aspect, a method for reciprocity calibration between UEs is provided, including:

sending, by a communication device, a first reference signal to a first user equipment UE, so that the first UE estimates first channel information of a first channel between the first UE and the communication device according to the first reference signal;

receiving the first channel information fed back by the first UE;

receiving a second reference signal sent by the first UE;

estimating second channel information of a second channel between the communication device and the first UE according to the second reference signal; and

performing reciprocity calibration according to the first channel information and the second channel information.

In a first possible implementation manner of the first aspect, when the communication device is a second UE, before the sending, by a communication device, a first reference signal to a first user equipment UE, the method further includes:

sending, by the second UE, a first calibration request to a base station, so that the base station sends scheduling information to the second UE and the first UE according to the first calibration request, where the scheduling information includes an identifier of the first UE, an identifier of the second UE, and a time-frequency resource.

In a second possible implementation manner of the first aspect, when the communication device is a base station, before the sending, by a communication device, a first reference signal to a first user equipment UE, the method further includes:

receiving, by the base station, a second calibration request sent by the first UE, and sending scheduling information to the first UE according to the second calibration request, where the scheduling information includes an identifier of the first UE and a time-frequency resource.

With reference to the first aspect, the first possible implementation manner of the first aspect, or the second possible implementation manner of the first aspect, in a third possible implementation manner of the first aspect, the performing reciprocity calibration according to the first channel information and the second channel information specifically includes:

adjusting a reciprocity coefficient, so that a first channel matrix corresponding to the first channel information is equal to a second channel matrix corresponding to the second channel information.

According to a second aspect, a method for reciprocity calibration between UEs is provided, including:

receiving, by a first user equipment UE, a first reference signal sent by a communication device, and estimating first channel information of a first channel between the first UE and the communication device according to the first reference signal; sending the first channel information to the communication device; and sending a second reference signal to the communication device, so that the communication device estimates second channel information of a second channel between the communication device and the first UE according to the second reference signal, and performs reciprocity calibration according to the first channel information and the second channel information.

In a first possible implementation manner of the second aspect, when the communication device is a second UE, before the receiving, by a first user equipment UE, a first reference signal sent by a communication device, the method further includes:

receiving scheduling information that is sent by a base station according to a first calibration request, where the scheduling information includes an identifier of the first UE, an identifier of the second UE, and a time-frequency resource.

In a second possible implementation manner of the second aspect, when the communication device is a base station, before the receiving, by a first user equipment UE, a first reference signal sent by a communication device, the method further includes:

sending a second calibration request to the base station; and receiving scheduling information that is sent by the base station according to the second calibration request, where the scheduling information includes an identifier of the first UE and a time-frequency resource.

According to a third aspect, a communication device is provided, including:

a first sending unit, configured to send a first reference signal to a first user equipment UE, so that the first UE estimates first channel information of a first channel between the first UE and the communication device according to the first reference signal; a first receiving unit, configured to receive the first channel information fed back by the first UE; a second receiving unit, configured to receive a second reference signal sent by the first UE; an estimating unit, configured to estimate second channel information of a second channel between the communication device and the first UE according to the second reference signal received by the second receiving unit; and a calibration unit, configured to perform reciprocity calibration according to the first channel information received by the first receiving unit and the second channel information estimated by the estimating unit.

In a first possible implementation manner of the third aspect, when the communication device is a second UE, the communication device further includes:

a second sending unit, configured to send a first calibration request to a base station, so that the base station sends scheduling information to the second UE and the first UE according to the first calibration request, where the scheduling information includes an identifier of the first UE, an identifier of the second UE, and a time-frequency resource.

In a second possible implementation manner of the third aspect, when the communication device is a base station, the communication device further includes:

a third receiving unit, configured to receive a second calibration request sent by the first UE; and a second sending unit, configured to send scheduling information to the first UE according to the second calibration request received by the third receiving unit, where the scheduling information includes an identifier of the first UE and a time-frequency resource.

With reference to the third aspect, the first possible implementation manner of the third aspect, or the second possible implementation manner of the third aspect, in a third possible implementation manner of the third aspect, the calibration unit is specifically configured to:

adjust a reciprocity coefficient, so that a first channel matrix corresponding to the first channel information is equal to a second channel matrix corresponding to the second channel information.

According to a fourth aspect, a first user equipment UE is provided, including:

a first receiving unit, configured to receive a first reference signal sent by a communication device, where first channel information of a first channel between the first UE and the communication device is estimated according to the first reference signal; a first sending unit, configured to send the first channel information to the communication device; and a second sending unit, configured to send a second reference signal to the communication device, so that the communication device estimates second channel information of a second channel between the communication device and the first UE according to the second reference signal, and performs reciprocity calibration according to the first channel information and the second channel information.

In a first possible implementation manner of the fourth aspect, when the communication device is a second UE, the first UE further includes:

a second receiving unit, configured to receive scheduling information that is sent by a base station according to a first calibration request, where the scheduling information includes an identifier of the first UE, an identifier of the second UE, and a time-frequency resource.

In a second possible implementation manner of the fourth aspect, when the communication device is a base station, the first UE further includes:

a third sending unit, configured to send a second calibration request to the base station; and
a second receiving unit, configured to receive scheduling information that is sent by the base station according to the second calibration request, where the scheduling information includes an identifier of the first UE and a time-frequency resource.

According to a fifth aspect, a communication device is provided, including:

a communication unit, configured to communicate with an external device;
a transmitter, configured to send a first reference signal to a first user equipment UE by using the communication unit, so that the first UE estimates first channel information of a first channel between the first UE and the communication device according to the first reference signal;
a receiver, configured to receive, by using the communication unit, the first channel information fed back by the first UE, where
the receiver is further configured to receive, by using the communication unit, a second reference signal sent by the first UE; and
a processor, configured to estimate second channel information of a second channel between the communication device and the first UE according to the second reference signal, where
the processor is further configured to perform reciprocity calibration according to the first channel information and the second channel information.

In a first possible implementation manner of the fifth aspect, when the communication device is a second UE, the transmitter is further configured to send a first calibration request to a base station by using the communication unit, so that the base station sends scheduling information to the second UE and the first UE according to the first calibration request, where the scheduling information includes an identifier of the first UE, an identifier of the second UE, and a time-frequency resource.

In a second possible implementation manner of the fifth aspect, when the communication device is a base station, the receiver is further configured to receive, by using the communication unit, a second calibration request sent by the first UE, and scheduling information is sent to the first UE according to the second calibration request, where the scheduling information includes an identifier of the first UE and a time-frequency resource.

With reference to the fifth aspect, the first possible implementation manner of the fifth aspect, or the second possible implementation manner of the fifth aspect, in a third possible implementation manner of the fifth aspect:

that the processor performs reciprocity calibration according to the first channel information and the second channel information is specifically configured to adjust a reciprocity coefficient, so that a first channel matrix corresponding to the first channel information is equal to a second channel matrix corresponding to the second channel information.

According to a sixth aspect, a first user equipment UE is provided, including:

a communication unit, configured to communicate with an external device;
a receiver, configured to receive, by using the communication unit, a first reference signal sent by a communication device, where first channel information of a first channel between the first UE and the communication device is estimated according to the first reference signal; and
a transmitter, configured to send the first channel information to the communication device by using the communication unit, where
the transmitter is further configured to send a second reference signal to the communication device by using the communication unit, so that the communication device estimates second channel information of a second channel between the communication device and the first UE according to the second reference signal, and performs reciprocity calibration according to the first channel information and the second channel information.

In a first possible implementation manner of the sixth aspect, when the communication device is a second UE, the receiver is further configured to receive, by using the communication unit, scheduling information that is sent by a base station according to a first calibration request, where the scheduling information includes an identifier of the first UE, an identifier of the second UE, and a time-frequency resource.

In a second possible implementation manner of the sixth aspect, when the communication device is a base station, the transmitter is further configured to send a second calibration request to the base station by using the communication unit, and scheduling information that is sent by the base station according to the second calibration request is received, where the scheduling information includes an identifier of the first UE and a time-frequency resource.

According to a seventh aspect, a communications system is provided, including: a communication device and a first user equipment UE, where the communication device is the communication device corresponding to any one of the possible implementation manners of the third aspect, and the first UE is the first UE corresponding to any one of possible implementation manners of the fourth aspect; or the communication device is the communication device corresponding to any one of possible implementation manners of the fifth aspect, and the first UE is the first UE corresponding to any one of possible implementation manners of the sixth aspect.

According to the method for reciprocity calibration between UEs, the apparatus, and the communications system that are provided in the embodiments of the present invention, a communication device receives first channel information that is of a first channel between a first UE and the communication device and is estimated by the first UE according to a first reference signal sent by the communication device, and second channel information that is of a second channel between the first UE and the communication device and is estimated according to a second reference signal reported by the first UE, so as to perform reciprocity error calibration between UEs according to the foregoing first channel information and the foregoing second channel information, thereby ensuring performance of the communications system.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic flowchart of an method for reciprocity calibration between UEs according to an embodiment of the present invention;
FIG. 2 is a schematic flowchart of another method for reciprocity calibration between UEs according to an embodiment of the present invention;
FIG. 3 is a schematic flowchart of still another method for reciprocity calibration between UEs according to an embodiment of the present invention;
FIG. 4 is a schematic flowchart of yet another method for reciprocity calibration between UEs according to an embodiment of the present invention;
FIG. 5 is a schematic diagram of an apparatus of a communication device according to an embodiment of the present invention;
FIG. 6 is a schematic diagram of an apparatus of another communication device according to an embodiment of the present invention;
FIG. 7 is a schematic diagram of an apparatus of still another communication device according to an embodiment of the present invention;
FIG. 8 is a schematic diagram of an apparatus of a first user equipment UE according to an embodiment of the present invention;
FIG. 9 is a schematic diagram of an apparatus of another first UE according to an embodiment of the present invention;
FIG. 10 is a schematic diagram of an apparatus of still another first UE according to an embodiment of the present invention;
FIG 11 is a schematic diagram of an apparatus of a communication device according to another embodiment of the present invention;
FIG. 12 is a schematic diagram of an apparatus of a first UE according to another embodiment of the present invention;
FIG. 13 is a system architecture diagram of a communications system according to an embodiment of the present invention; and
FIG. 14 is a system architecture diagram of another communications system according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

The embodiments provided in the present invention are applied to an LTE (Long Term Evolution, Long Term Evolution) TDD (Time Division Duplexing, time division duplex) system. An uplink channel and a downlink channel of the foregoing TDD system use a same frequency band, and the downlink channel can be estimated according to the uplink channel, so as to improve downlink transmission performance. However, because absolute channel reciprocity does not exist in an actual TDD system, and a slight reciprocity error of uplink and downlink channels may cause an apparent change in system performance, an actual downlink channel cannot be reflected according to an uplink channel. Therefore, reciprocity calibration needs to be performed on an antenna before a characteristic of TDD channel reciprocity is used. Specifically, a main application scenario of the present invention is a cellular radio communications system, and a reciprocity error in the communications system is mainly include two parts: a reciprocity error on a base station side and a reciprocity error on a UE side. For the reciprocity error on the base station side, a reciprocity error of the base station is generally resolved by using self-calibration of an antenna of the base station in the prior art, that is, a calibration antenna is selected from the antenna of the base station side, so as to calibrate another antenna of the base station by using the calibration antenna. However, a reciprocity error problem, between a receive channel and a transmit channel, on the UE (User Equipment, user equipment) side does not draw enough attention due to a limitation on an application scenario, so that there is no corresponding solution either. Therefore, based on the foregoing application scenario, the embodiments of the present invention provide an method for reciprocity calibration between UEs to resolve an reciprocity error problem between UEs.

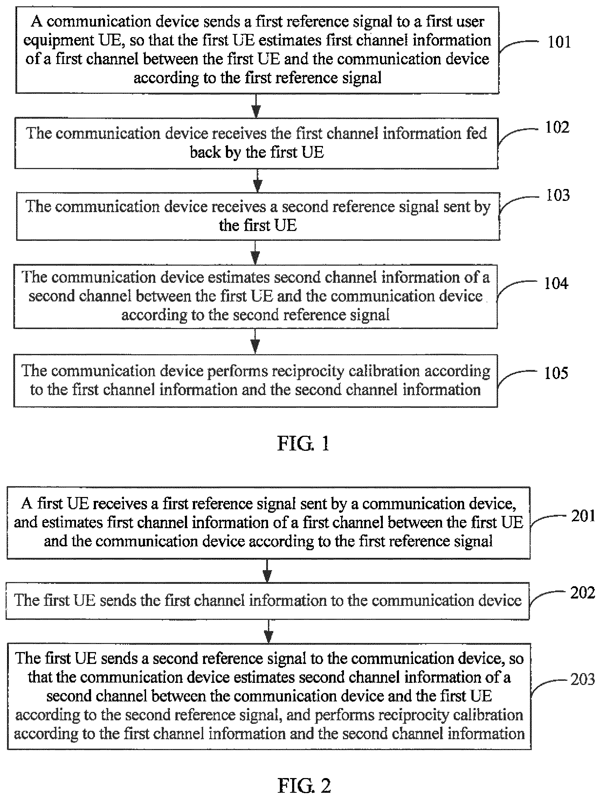

As shown in FIG 1, an embodiment of the present invention provides an method for reciprocity calibration method, where the method may be implemented by a communication device. The method for reciprocity calibration between UEs specifically includes the following steps:

101. The communication device sends a first reference signal to a first user equipment UE, so that the first UE estimates first channel information of a first channel between the first UE and the communication device according to the first reference signal.

Exemplarily, the foregoing communication device may be a base station, or may be a UE, and the foregoing first reference signal may be a signal known by the first UE, for example, pilot information. It should be noted that in this embodiment, the communication device can not only perform, with one first UE, reciprocity calibration between a single UE and the communication device, but also interact with multiple first UEs at the same time to implement reciprocity calibration between the multiple UEs.

102. The communication device receives the first channel information fed back by the first UE.

103. The communication device receives a second reference signal sent by the first UE.

The foregoing second reference signal may be a signal known by the communication device, for example, pilot information.

104. The communication device estimates second channel information of a second channel between the first UE and the communication device according to the second reference signal.

Specifically, when the foregoing communication device is a base station, the first channel, described in this embodiment of the present invention, between the first UE and the communication device is a downlink between the base station and the first UE, and the second channel is an uplink between the first UE and the base station; when the foregoing communication device is a second UE, the first channel and the second channel, described in this embodiment of the present invention, between the first UE and the communication device are receive and transmit channels between the first UE and the second UE.

105. The communication device performs reciprocity calibration according to the first channel information and the second channel information.

Optionally, step 105 may specifically include the following content:

105a. The communication device adjusts a first channel matrix corresponding to the first channel information and a second channel matrix corresponding to the second channel information, so that the first channel matrix is equal to the second channel matrix.

Exemplarily, the communication device calculates a reciprocity adjustment coefficient according to the acquired first channel information and second channel information between the first UE and the communication device, and sends the reciprocity adjustment coefficient to the first UE, so that the first UE adjusts, according to the reciprocity adjustment coeffcient, the first channel matrix corresponding to the first channel information and the second channel matrix corresponding to the second channel information, and the foregoing first channel matrix is equal to the foregoing second channel matrix. The foregoing reciprocity adjustment coefficient is shown in Formula 1:

$$\frac{\alpha_1^r}{\alpha_1^t} = \frac{\alpha_2^r}{\alpha_2^t} = \cdots = \frac{\alpha_N^r}{\alpha_N^t} = \eta \qquad \text{Formula 1.}$$

$\eta$ is a nonzero constant. Coefficients of a radio-frequency receive channel (the foregoing first channel) of $UE_1, UE_2, \ldots, UE_N$ are respectively $\alpha_1^r$, $\alpha_2^r, \ldots, \alpha_N^r$, and coefficients of a radio-frequency transmit channel (the foregoing second channel) of the $UE_1, UE_2, \ldots, UE_N$ are respectively $\alpha_1^t$, $\alpha_2^t, \ldots, \alpha_N^t$. After the foregoing calibration process, a calibration result is that a first channel matrix of first channel information between each first UE and the communication device is equal to a second channel matrix of corresponding second channel information.

Exemplarily, the present invention provides two methods of reciprocity calibration between UEs. A first implementation manner is: When the communication device is a second UE, the base station configures scheduling information for the first UE and the second UE, so that the first UE and the second UE directly perform reciprocity calibration between UEs according to the scheduling information. A second implementation manner is: When the communication device is the base station, the base station separately performs reciprocity calibration on at least two first UEs, so as to implement reciprocity calibration between UEs.

Optionally, when the communication device in the present invention is a second UE (that is, in the first implementation manner), before step 101, the method further includes:

a1. The second UE sends a first calibration request to a base station, so that the base station sends scheduling information to the second UE and the first UE according to the first calibration request.

The foregoing scheduling information includes but is not limited to: an identifier of the first UE, an identifier of the second UE, and a time-frequency resource.

Optionally, when the communication device in the present invention is a base station (that is, in the second implementation manner), before step 101, the method further includes:

a2. The base station receives a second calibration request sent by the first UE, and sends scheduling information to the first UE according to the second calibration request.

The foregoing scheduling information includes but is not limited to: an identifier of the first UE and a time-frequency resource.

Exemplarily, in a communications system described in the present invention, each UE is allocated with a unique UE identifier, which is used to distinguish different UEs in the communications system (for example, used to distinguish the first UE and the second UE). In addition, the foregoing time-frequency resource is a specific time-frequency domain position of the first reference signal when the communication device sends the first reference signal to the first UE, and a specific time-frequency domain position of the second reference signal when the first UE sends the second reference signal to the communication device. Therefore, the first UE can accurately and effectively acquire the first reference signal sent by the communication device, and the communication device can accurately and effectively acquire the second reference signal sent by the first UE.

According to the method for reciprocity calibration between UEs provided in this embodiment of the present invention, a communication device receives first channel information that is of a first channel between a first UE and the communication device and is estimated by the first UE according to a first reference signal sent by the communication device, and second channel information that is of a second channel between the first UE and the communication device and is estimated according to a second reference signal reported by the first UE, so as to perform reciprocity error calibration between UEs according to the foregoing first channel information and the foregoing second channel information, thereby ensuring performance of a communications system.

Corresponding to the method for reciprocity calibration between UEs shown in FIG. 1, the following describes, from a perspective of a first UE, an method for reciprocity calibration between UEs provided in an embodiment of the present invention.

As shown in FIG. 2, an embodiment of the present invention provides an method for reciprocity calibration between UEs, where the method may be implemented by a first UE, and the method for reciprocity calibration between UEs specifically includes the following steps:

201. The first UE receives a first reference signal sent by a communication device, and estimates first channel information of a first channel between the first UE and the communication device according to the first reference signal.

Exemplarily, the foregoing communication device may be a base station, or may be a UE. The foregoing first reference signal is a signal known by the first UE. It should be noted that in this embodiment, the communication device can not only perform, with one first UE, reciprocity calibration between a single UE and the communication device, but also interact with multiple first UEs at the same time to implement reciprocity calibration between the multiple UEs.

202. The first UE sends the first channel information to the communication device.

203. The first UE sends a second reference signal to the communication device, so that the communication device estimates second channel information of a second channel between the communication device and the first UE according to the second reference signal, and performs reciprocity calibration according to the first channel information and the second channel information.

Exemplarily, after receiving a reciprocity adjustment coefficient calculated by the communication device according to the acquired first channel information and second channel information between the first UE and the communication device, the first UE adjusts, according to the reciprocity adjustment coefficient, a first channel matrix corresponding to the first channel information and a second channel matrix corresponding to the second channel information, so that the foregoing first channel matrix is equal to the foregoing second channel matrix. The foregoing reciprocity adjustment coefficient is shown in Formula 2:

$$\frac{\alpha_1^r}{\alpha_1^t} = \frac{\alpha_2^r}{\alpha_2^t} = \cdots = \frac{\alpha_N^r}{\alpha_N^t} = \eta$$

Formula 2.

$\eta$ is a nonzero constant. Coefficients of a radio-frequency receive channel (the foregoing first channel) of $UE_1, UE_2, \ldots, UE_N$ are respectively $\alpha_1^r$, $\alpha_2^r$, ..., $\alpha_N^r$, and coefficients of a radio-frequency transmit channel (the foregoing second channel) of the $UE_1, UE_2, \ldots, UE_N$ are respectively $\alpha_1^t$, $\alpha_2^t$, ..., $\alpha_N^t$. After the foregoing calibration process, a calibration result is that a first channel matrix of first channel information between each first UE and the communication device is equal to a second channel matrix of corresponding second channel information.

Exemplarily, the present invention provides two methods for reciprocity calibration between UEs. A first implementation manner is: When the communication device is a second UE, the base station configures scheduling information for the first UE and the second UE, so that the first UE and the second UE directly perform reciprocity calibration between UEs according to the scheduling information. A second implementation manner is: When the communication device is the base station, the base station separately performs reciprocity calibration on at least two first UEs, so as to implement reciprocity calibration between UEs.

Optionally, when the communication device in the present invention is a second UE (that is, in the first implementation manner), before step 201, the method further includes:

b1. The first UE receives scheduling information sent by a base station according to a first calibration request sent by the second UE.

The foregoing scheduling information includes but is not limited to: an identifier of the first UE, an identifier of the second UE, and a time-frequency resource.

Optionally, when the communication device in the present invention is a base station (that is, in the second implementation manner), before step 201, the method further includes:

b2. The first UE sends a second calibration request to the base station, so that the base station sends scheduling information to the first UE according to the second calibration request.

The foregoing scheduling information includes but is not limited to: an identifier of the first UE and a time-frequency resource.

Exemplarily, in a communications system described in the present invention, each UE is allocated with a unique UE identifier, which is used to distinguish different UEs in the communications system (for example, used to distinguish the first UE and the second UE). In addition, the foregoing time-frequency resource is a specific time-frequency domain position of the first reference signal when the communication device sends the first reference signal to the first UE, and a specific time-frequency domain position of the second reference signal when the first UE sends the second reference signal to the communication device. Therefore, the first UE can accurately and effectively acquire the first reference signal sent by the communication device, and the communication device can accurately and effectively acquire the second reference signal sent by the first UE.

According to the method for reciprocity calibration between UEs provided in this embodiment of the present invention, a first UE estimates first channel information of a first channel between the first UE and a communication device according to a first reference signal sent by the communication device, and feeds back the first channel information to a base station, so that the base station performs reciprocity error calibration between UEs according to the first channel information, and second channel information that is of a second channel between the first UE and the communication device and is estimated according to a second reference signal reported by the first UE, thereby ensuring performance of a communications system.

The following exemplarily describes, in a specific application scenario, an method for reciprocity calibration between UEs provided in an embodiment of the present invention. For descriptions about technical terms, concepts, and the like in the following embodiment that are related to the foregoing embodiments, reference may be made to the foregoing embodiments.

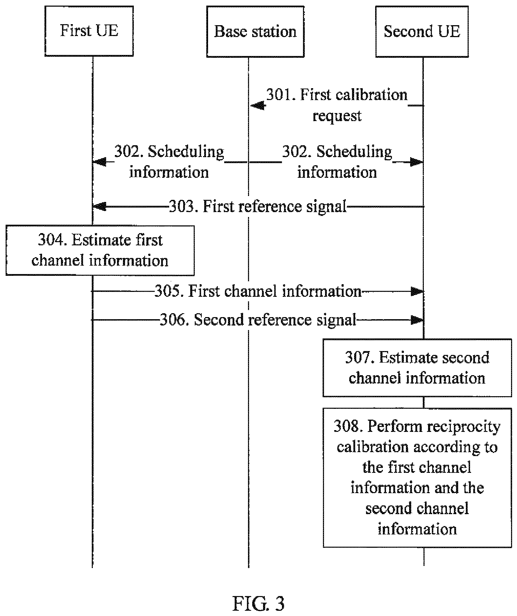

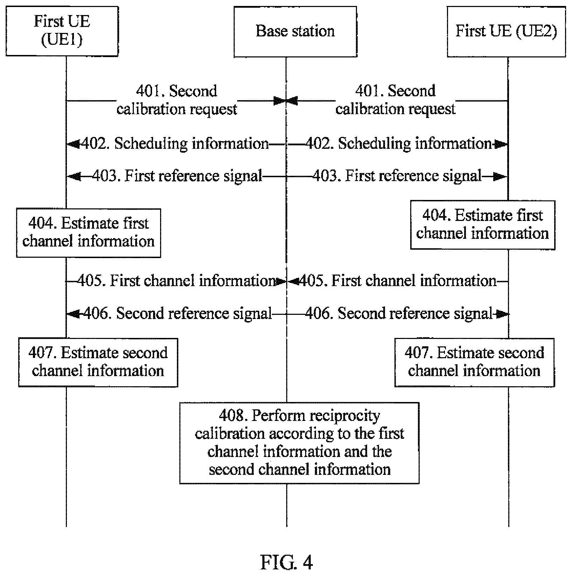

The following embodiments mainly focus on different processes for reciprocity calibration between UEs corresponding to different communication devices. Specifically, as shown in FIG. 3, when the communication device is a second UE, a corresponding reciprocity calibration method is a method for performing reciprocity calibration between UEs directly by a first UE and the second UE in a case in which a base station involves resource scheduling. As shown in FIG. 4, when the communication device is a base station, a corresponding reciprocity calibration method is a method for implementing reciprocity calibration between UEs by separately controlling at least two first UEs by the base station.

Specifically, for the corresponding method for reciprocity calibration between UEs, provided in an embodiment of the present invention, when the communication device is a second UE, reference may be made to FIG 3, as shown in FIG. 3.

301. The second UE sends a first calibration request to a base station.

302. The base station sends scheduling information to the communication device and a UE according to the first calibration request.

Exemplarily, after the second UE sends the first calibration request to the base station, the base station sends the scheduling information to the second UE and at least one first UE according to the first calibration request, so that the second UE and each first UE fast and accurately acquire a first reference signal or a second reference signal according to the scheduling information. The foregoing scheduling information includes but is not limited to: an identifier of the first UE, an identifier of the second UE, and a time-frequency resource. Specifically, in a communications system described in the present invention, each UE is allocated with a unique UE identifier, which is used to distinguish different UEs in the communications system (for example, used to distinguish the first UE and the second UE). In addition, the foregoing time-frequency resource is a specific time-frequency domain position of the first reference signal when the second UE sends the first reference signal to the first UE, and a specific time-frequency domain position of the second reference signal when the first UE sends the second reference signal to the second UE. Therefore, the first UE can accurately and effectively acquire the first reference signal sent by the second UE, and the second UE can accurately and effectively acquire the second reference signal sent by the first UE.

303. The second UE sends a first reference signal to a first UE.

The foregoing first reference signal is a signal known by the first UE.

Optionally, when the foregoing scheduling information further includes transmit power, step 303 specifically includes: the second UE can send the first reference signal to the first UE at the transmit power.

304. The first UE calculates first channel information of a first channel between the first UE and the second UE according to the first reference signal.

305. The second UE receives the first channel information fed back by the first UE.

306. The second UE receives a second reference signal reported by the first UE.

The foregoing second reference signal is a signal known by the second UE.

Optionally, when the foregoing scheduling information includes transmit power, step 306 specifically includes: the second UE receives the second reference signal that is reported by the first UE at the transmit power.

307. The second UE calculates second channel information of a second channel between the first UE and the second UE according to the second reference signal.

For the second UE, the first channel and the second channel between the foregoing first UE and the second UE are a transmit channel and a receive channel between the first UE and the second UE; however, for the first UE, the first channel and the second channel between the foregoing first UE and the second UE are a receive channel and a transmit channel between the first UE and the second UE.

308. The second UE performs reciprocity calibration according to the first channel information and the second channel information.

Optionally, step 308 specifically includes the following content: The second UE adjusts a first channel matrix corresponding to the first channel information and a second channel matrix corresponding to the second channel information, so that the first channel matrix is equal to the second channel matrix.

Exemplarily, the second UE calculates a reciprocity adjustment coefficient according to the acquired first channel information and second channel information between the first UE and the second UE, and sends the reciprocity adjustment coefficient to the first UE, so that the first UE adjusts, according to the reciprocity adjustment coefficient, the first channel matrix corresponding to the first channel information and the second channel matrix corresponding to the second channel information, and the foregoing first channel matrix is equal to the foregoing second channel matrix.

Exemplarily, in this embodiment, a UE1 is used as an example for the second UE, and a UE2 is used as an example for the first UE. In addition, in this embodiment, the base station allocates configuration information for calibration to the UE1 and the UE2 specifically by using downlink scheduling, where the scheduling information can be sent, by using a control channel or another channel, to all UEs involving calibration, or to some UEs, which then forward the scheduling information to other users. When the communications system includes only one first UE, that is, when the communications system includes the UE1 and the UE2, a process of reciprocity calibration between UEs provided in this embodiment is: First, the UE2 and the UE1 respectively estimate a first channel to obtain first channel information H1 and a second channel to obtain second channel information H2, as specifically shown in the following:

$$H_1 = \alpha_2^t \cdot h_1 \cdot \alpha_1^r \qquad \text{Formula 3;}$$

and

$$H_2 = \alpha_1^t \cdot h_1 \cdot \alpha_2^r \qquad \text{Formula 4.}$$

The foregoing $\alpha_1^r$ is a receive channel parameter of the UE1, $\alpha_1^t$ is a transmit channel parameter, and $h_1$ is a space channel between the UE1 and the UE2. $\alpha_2^r$ is a receive channel parameter of the UE2, and $\alpha_2^t$ is a transmit channel parameter of the UE2. H1 is made equal to H2 by using coefficient compensation

calibration; then, $\dfrac{\alpha_1^r}{\alpha_1^t} = \dfrac{\alpha_2^r}{\alpha_2^t}$, so that receive and transmit channel matrices between the UE1 and the UE2 are equal, thereby implementing reciprocity calibration between two UEs. In addition, when the communication device includes multiple UEs, that is, there are more than two UEs, a second UE, that is the UE1, should be first selected from all UEs on a user side, and all other UEs (that are, the UE2, a UE3,..., and a UEn, where n is a natural number greater than or equal to two) each send a first reference signal to the UE1, the UE1 broadcasts a second reference signal to all the other UEs at the same time, and it is finally implemented that

$$\frac{\alpha_1^r}{\alpha_1^t} = \frac{\alpha_2^r}{\alpha_2^t} = \cdots = \frac{\alpha_N^r}{\alpha_N^t} = \eta$$

where $\eta$ is a nonzero constant. After the foregoing calibration process, a calibration result is that a quotient of a receive and transmit channel coefficient of each UE is equal, that is, receive and transmit channel matrices of all the UEs are equal, thereby implementing reciprocity calibration between multiple UEs.

Exemplarily, in this embodiment, UEs send reference signals to each other to calculate a reciprocity parameter to complete calibration. In addition, because a distance between users is generally relatively short, accuracy of estimating the reference signals is relatively high. Therefore, accuracy of calibration is also relatively high.

It should be noted that, because a main application scenario of this embodiment is a cellular radio communications system, reciprocity calibration between UEs needs to be implemented on a cellular frequency band. In addition, in order not to interfere with normal communication between another UE and a base station, reciprocity calibration between the UEs needs to be performed under control of the base station, and reference signals between the UEs need to be sent at the same time as much as possible to ensure that a space signal is unchanged.

According to the method for reciprocity calibration between UEs provided in this embodiment of the present invention, a second UE receives first channel information that is of a first channel between first UE and the second UE and is estimated by the first UE according to a first reference signal sent by the second UE, and second channel information that is of a second channel between the first UE and the second UE and is estimated according to a second reference signal reported by the first UE, so as to perform reciprocity error calibration between UEs according to the foregoing first channel information and the foregoing second channel information, thereby ensuring performance of a communications system.

Specifically, for the corresponding method for reciprocity calibration between UEs, provided in an embodiment of the present invention, when the communication device is a base station, reference may be made to FIG. 4, as shown in FIG. 4.

401. A first UE sends a second calibration request to the base station.

402. The base station sends scheduling information to the first UE according to the second calibration request.

Exemplarily, in this embodiment, a communications system may include one first UE or may include multiple first UEs, and in an actual application, the communications system generally includes multiple first UEs, so as to perform reciprocity calibration between the multiple UEs. Specifically, after each first UE in at least one first UE sends a second calibration request to the base station, the base station sends scheduling information to each first UE according to the second calibration request, so that each first UE fast and accurately acquires a first reference signal according to the scheduling information. The foregoing scheduling information includes but is not limited to: an identifier of a first UE of each first UE, and a time-frequency resource. Specifically, in the communications system described in the present invention, each UE is allocated with a unique UE identifier, which is used to distinguish multiple different first UEs in the communications system. In addition, the foregoing time-frequency resource is a specific time-frequency domain position of the first reference signal when the communication device sends the first reference signal to the first UE, so that the first UE can accurately and effectively acquire the first reference signal sent by the base station, and the communication device can accurately and effectively acquire a second reference signal sent by the first UE.

403. The base station sends a first reference signal to the first UE.

The foregoing first reference signal is a signal known by the first UE.

404. The first UE estimates first channel information of a first channel between the first UE and the base station according to the first reference signal.

405. The base station receives the first channel information fed back by the first UE.

406. The base station receives a second reference signal reported by the first UE.

The foregoing second reference signal is a signal known by the base station.

Optionally, when the foregoing scheduling information may further specifically include transmit power, step 406 specifically includes: the base station receives the second reference signal that is reported by the first UE at the foregoing transmit power.

407. The base station estimates second channel information of a second channel between the first UE and the base station according to the second reference signal.

Specifically, the foregoing first channel between the first UE and the base station is a downlink between the base station and the first UE, and the foregoing second channel between the first UE and the base station is an uplink between the first UE and the base station.

408. The base station performs reciprocity calibration according to the first channel information and the second channel information.

Optionally, step 408 specifically includes the following content: The base station adjusts a first channel matrix corresponding to the first channel information and a second channel matrix corresponding to the second channel information, so that the first channel matrix is equal to the second channel matrix.

Exemplarily, the base station calculates a reciprocity adjustment coefficient according to the acquired first channel information and second channel information between the first UE and the base station, and sends the reciprocity adjustment coefficient to the first UE, so that the first UE adjusts, according to the reciprocity adjustment coefficient, the first channel matrix corresponding to the first channel information and the second channel matrix corresponding to the second channel information, and the foregoing first channel matrix is equal to the foregoing second channel matrix.

Exemplarily, in this embodiment, two first UEs (merely used as an example herein, but not limited to the two first UEs in a specific application) are used as an example for a user end. That is, a UE1 and a UE2 are used as an example. In addition, the base station in this embodiment allocates configuration information for calibration to the UE1 and the UE2 specifically by using downlink scheduling, where the scheduling information can be sent, by using a control channel or another channel, to all first UEs involving calibration, or to some first UEs, which then forward the scheduling information to another user. Specifically, a process of reciprocity calibration between UEs provided in this embodiment is: First, the UE1 and the UE2 separately send a second reference channel to the base station, and the base station separately estimates first channel information of first channels (that is, uplinks) of the UE1 and the UE2 according to the second reference channel, as specifically shown in the following:

$$H_1^U = \alpha_1^t \cdot h_1 \cdot \beta^r \quad \text{Formula 5;}$$

and

$$H_2^U = \alpha_2^t \cdot h_2 \cdot \beta^r \quad \text{Formula 6.}$$

The foregoing $\alpha_1^t$ is a transmit channel coefficient of the UE1, the foregoing $\alpha_2^t$ is a transmit channel coefficient of the UE2, the foregoing $h_1$ is a space channel between the UE1 and the base station, the foregoing $h_2$ is a space channel between the UE2 and the base station, and $\beta^r$ is a receive channel coefficient of a receiver of the base station. When the UE1 and the UE2 separately send the second reference signal to the base station, the base station sends the first reference signal to the UE1 and the UE2, and the UE1 and the UE2 separately estimate second channel information of second channels (downlinks) according to the first reference signal sent by the base station, as specifically shown in the following:

$$H_1^D = \alpha_1^r \cdot h_1 \cdot \beta^t \quad \text{Formula 7;}$$

and

$$H_2^D = \alpha_2^r \cdot h_2 \cdot \beta^t \quad \text{Formula 8.}$$

The foregoing $\alpha_1^r$ is a receive channel coefficient of the UE1, the foregoing $\alpha_2^r$ is a receive channel coefficient of the UE2, and $\beta^t$ is a transmit channel coefficient of the receiver of the base station.

According to the foregoing Formulas 5 to Formula 8, $H_1^U$ is made equal to $H_1^D$, then, a reciprocity calibration coefficient of the UE1 is obtained: $A = \dfrac{\alpha_1^r}{\alpha_1^t} = \dfrac{h_1 \cdot \beta^r}{h_1 \cdot \beta^t} = \dfrac{\beta^r}{\beta^t}$, $H_2^U$ is made equal to $H_2^D$, then, a reciprocity calibration coefficient of the UE2 is obtained: $B = \dfrac{\alpha_2^r}{\alpha_2^t} = \dfrac{h_2 \cdot \beta^r}{h_2 \cdot \beta^t} = \dfrac{\beta^r}{\beta^t}$

A is made equal to B by using coefficient compensation calibration; then, $\dfrac{\alpha_1^r}{\alpha_1^t} = \dfrac{\alpha_2^r}{\alpha_2^t}$, so that a first channel matrix and a second channel matrix between the UE1 and the base station are equal, and a first channel matrix and a second channel matrix between the UE2 and the base station are equal, thereby implementing reciprocity calibration between two UEs. In addition, when the foregoing process is implemented when there are more than two first UEs (that is, UE3, UE4,..., and UEn, where n is a natural number greater than or equal to three), it is finally implemented that $\dfrac{\alpha_1^r}{\alpha_1^t} = \dfrac{\alpha_2^r}{\alpha_2^t} = \cdots = \dfrac{\alpha_N^r}{\alpha_N^t} = \eta$ where η is a nonzero constant. After the foregoing calibration process, a calibration result is that a channel matrix of a receive channel and a transmit channel of each first UE is equal, and a first channel matrix and a second channel matrix between each first UE and the base station are equal, thereby implementing reciprocity calibration between multiple UEs.

Exemplarily, in this embodiment, the base station separately controls at least two first UEs, so that a reciprocity parameter between UEs is calculated by fully using a resource preconfigured by the base station without additional resource scheduling.

It should be noted that, when the communications system includes only one first UE, the base station may be considered as the second UE in the embodiment corresponding to FIG. 3, and directly performs, with the first UE, reciprocity calibration between UEs during which the base station involves resource scheduling. In addition, because a main application scenario of this embodiment is a cellular radio communications system, reciprocity calibration between UEs needs to be implemented on a cellular frequency band, and in order not to interfere with normal communication between another UE and a base station, reciprocity calibration between the UEs needs to be performed under control of the base station, and reference signals between the UEs need to be sent at the same time as much as possible to ensure that a space signal is unchanged.

According to the method for reciprocity calibration between UEs provided in this embodiment of the present invention, a base station receives first channel information that is of a first channel between a first UE and the base station and is estimated by the first UE according to a first reference signal sent by the base station, and second channel information that is of a second channel between the first UE and the base station and is estimated according to a second reference signal reported by the first UE, so as to perform reciprocity error calibration between UEs according to the foregoing first channel information and the foregoing second channel information, thereby ensuring performance of a communications system.

Embodiments of the present invention further provide corresponding devices to implement the methods for reciprocity calibration between UEs provided in the embodiments of the present invention.

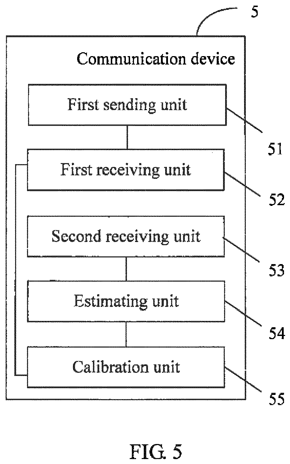

An embodiment of the present invention provides a communication device, which can be configured to implement the communication device in the embodiments shown in FIG. 1 to FIG. 4. For content, such as functions, working mechanisms, related technical terms, and concepts of the communication device provided in this embodiment of the present invention, reference may be made to the embodiments shown in FIG. 1 to FIG. 4. As shown in FIG 5, a communication device 5 includes: a first sending unit 51, a first receiving unit 52, a second receiving unit 53, an estimating unit 54, and a calibration unit 55.

The first sending unit 51 is configured to send a first reference signal to a first user equipment UE, so that the first UE estimates first channel information of a first channel between the first UE and the communication device according to the first reference signal.

The first receiving unit 52 is configured to receive the first channel information fed back by the first UE.

The second receiving unit 53 is configured to receive a second reference signal sent by the first UE.

The estimating unit 54 is configured to estimate second channel information of a second channel between the communication device and the first UE according to the second reference signal received by the second receiving unit 53.

The calibration unit 55 is configured to perform reciprocity calibration according to the first channel information received by the first receiving unit 52 and the second channel information estimated by the estimating unit 54.

According to the communication device provided in this embodiment of the present invention, the communication device receives first channel information that is of a first channel between a first UE and the communication device and is estimated by the first UE according to a first reference signal sent by the communication device, and second channel information that is of a second channel between the first UE and the communication device and is estimated according to a second reference signal reported by the first UE, so as to perform reciprocity error calibration between UEs according to the foregoing first channel information and the foregoing second channel information, thereby ensuring performance of a communications system.

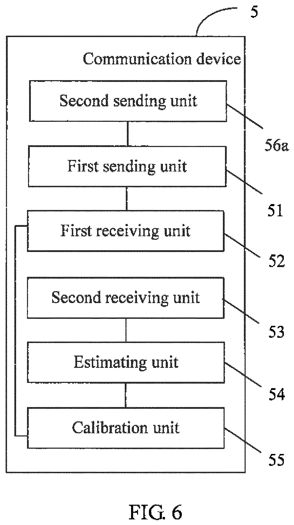

Optionally, as shown in FIG. 6, when the foregoing communication device is a second UE, the communication device 5 further includes: a second sending unit 56a.

The second sending unit 56a is configured to send a first calibration request to a base station, so that the base station sends scheduling information to the second UE and the first UE according to the first calibration request.

The foregoing scheduling information includes an identifier of the first UE, an identifier of the second UE, and a time-frequency resource.

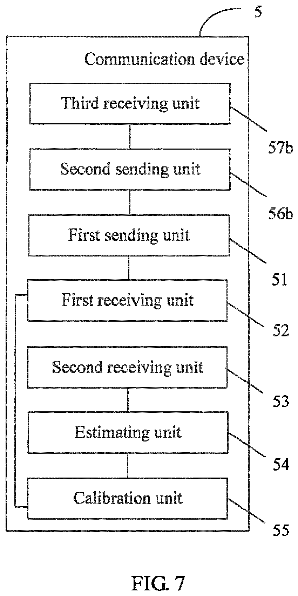

Optionally, as shown in FIG. 7, when the foregoing communication device is a base station, the communication device 5 further includes: a third receiving unit 57b and a second sending unit 56b.

The third receiving unit 57b is configured to receive a second calibration request sent by the first UE.

The second sending unit 56b is configured to send scheduling information to the first UE according to the second calibration request received by the third receiving unit 57b.

The foregoing scheduling information includes an identifier of the first UE and a time-frequency resource.

Optionally, the foregoing calibration unit 55 is specifically configured to adjust a reciprocity coefficient, so that a first channel matrix corresponding to the first channel information is equal to a second channel matrix corresponding to the second channel information.

According to the communication device provided in this embodiment of the present invention, the communication device receives first channel information that is of a first channel between a first UE and the communication device and is estimated by the first UE according to a first reference signal sent by the communication device, and second channel information that is of a second channel between the first UE and the communication device and is estimated according to a second reference signal reported by the first UE, so as to perform reciprocity error calibration between UEs according to the foregoing first channel information and the foregoing second channel information, thereby ensuring performance of a communications system.

Unit division of the communication device in this embodiment of the present invention is exemplary, and actually there may be multiple unit division methods to form the communication device in this embodiment of the present invention.

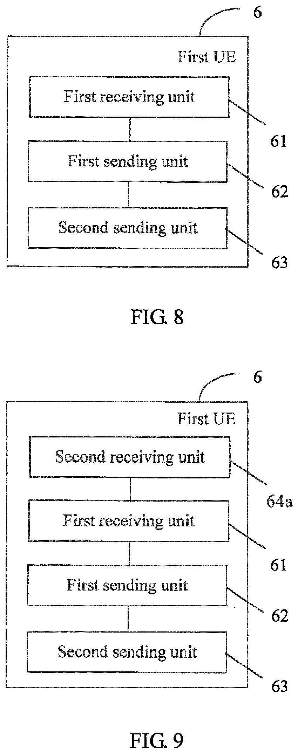

An embodiment of the present invention provides a first user equipment UE, which can be configured to implement the first UE in the embodiments shown in FIG. 1 to FIG. 4. For content, such as functions, working mechanisms, related technical terms, and concepts of a communication device provided in this embodiment of the present invention, reference may be made to the embodiments shown in FIG. 1 to FIG. 4. As shown in FIG. 8, the first UE 6 includes: a first receiving unit 61, a first sending unit 62, and a second sending unit 63.

The first receiving unit 61 is configured to receive a first reference signal sent by a communication device, where first channel information of a first channel between the first UE and the communication device is estimated according to the first reference signal.

The first sending unit 62 is configured to send the first channel information to the communication device.

The second sending unit 63 is configured to send a second reference signal to the communication device, so that the communication device estimates second channel information of a second channel between the communication device and the first UE according to the second reference signal, and performs reciprocity calibration according to the first channel information and the second channel information.

According to the first UE provided in this embodiment of the present invention, the first UE estimates first channel information of a first channel between the first UE and a communication device according to a first reference signal sent by the communication device, and feeds back the first channel information to a base station, so that the base station performs reciprocity error calibration between UEs according to the first channel information and second channel information that is of a second channel between the first UE and the communication device and is estimated according to a second reference signal reported by the first UE, thereby ensuring performance of a communications system.

Optionally, as shown in FIG. 9, when the communication device is a second UE, the first UE 6 further includes: a second receiving unit 64a.

The second receiving unit 64a is configured to receive scheduling information that is sent by a base station according to a first calibration request.

The foregoing scheduling information includes an identifier of the first UE, an identifier of the second UE, and a time-frequency resource.

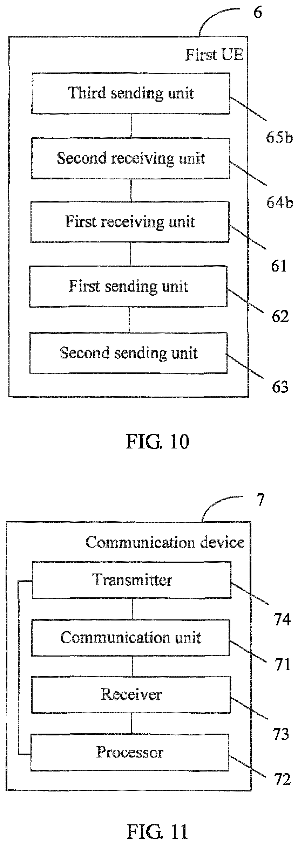

Optionally, as shown in FIG. 10, when the communication device is a base station, the first UE 6 further includes: a third sending unit 65b and a second receiving unit 64b.

The third sending unit 65b is configured to send a second calibration request to the base station.

The second receiving unit 64b is configured to receive scheduling information that is sent by the base station according to the second calibration request.

The foregoing scheduling information includes an identifier of the first UE and a time-frequency resource.

According to the first UE provided in this embodiment of the present invention, the first UE estimates first channel information of a first channel between the first UE and a communication device according to a first reference signal sent by the communication device, and feeds back the first channel information to a base station, so that the base station performs reciprocity error calibration between UEs according to the first channel information and second channel information that is of a second channel between the first UE and the communication device and is estimated according to a second reference signal reported by the first UE, thereby ensuring performance of a communications system.

Unit division of the first UE in this embodiment of the present invention is exemplary, and actually there may be multiple unit division methods to form the first UE in this embodiment of the present invention.

The communication device provided in this embodiment of the present invention may be a base station, or may be a user equipment UE. For content, such as specific working mechanisms, interworking with another network element, related technical terms, and concepts of the communication device, reference may be made to the communication device shown in the embodiments corresponding to FIG. 1 to FIG 4, and details are not described herein again.

Exemplarily, as shown in FIG. 11, the communication device 7 includes a communication unit 71, a processor 72, a receiver 73, and a transmitter 74.

The communication unit 71 is configured to communicate with an external device.

The transmitter 74 is configured to send a first reference signal to a first user equipment UE by using the communication unit 71, so that the first UE estimates first channel information of a first channel between the first UE and the communication device according to the first reference signal.

The receiver 73 is configured to receive, by using the communication unit 71, the first channel information fed back by the first UE.

The receiver 73 is further configured to receive, by using the communication unit 71, a second reference signal sent by the first UE.

The processor 72 is configured to estimate second channel information of a second channel between the communication device and the first UE according to the second reference signal.

The processor 72 is configured to perform reciprocity calibration according to the first channel information and the second channel information.

Optionally, when the communication device is a second UE, the transmitter 74 is further configured to send a first calibration request to a base station by using the communication unit 71, so that the base station sends scheduling information to the second UE and the first UE according to the first calibration request. The foregoing scheduling information includes an identifier of the first UE, an identifier of the second UE, and a time-frequency resource.

Optionally, when the communication device is a base station, the receiver 73 is further configured to receive, by using the communication unit 71, a second calibration request sent by the first UE, and scheduling information is sent to the first UE according to the second calibration request. The foregoing scheduling information includes an identifier of the first UE and a time-frequency resource.

Optionally, that the processor 72 performs reciprocity calibration according to the first channel information and the second channel information is specifically configured to adjust a reciprocity coefficient, so that a first channel matrix corresponding to the first channel information is equal to a second channel matrix corresponding to the second channel information.

According to the communication device provided in this embodiment of the present invention, the communication device receives first channel information that is of a first channel between a first UE and the communication device and is estimated by the first UE according to a first reference signal sent by the communication device, and second channel information that is of a second channel between the first UE and the communication device and is estimated according to a second reference signal reported by the first UE, so as to perform reciprocity error calibration between UEs according to the foregoing first channel information and the foregoing second channel information, thereby ensuring performance of a communications system.

Unit division of the communication device in this embodiment of the present invention is exemplary, and actually there may be multiple unit division methods to form the communication device in this embodiment of the present invention.

An embodiment of the present invention provides a first user equipment UE. For content, such as specific working mechanisms, interworking with another network element, related technical terms, and concepts of the first UE, reference may be made to the first UE shown in the embodiments corresponding to FIG. 1 to FIG. 4, and details are not described herein again.

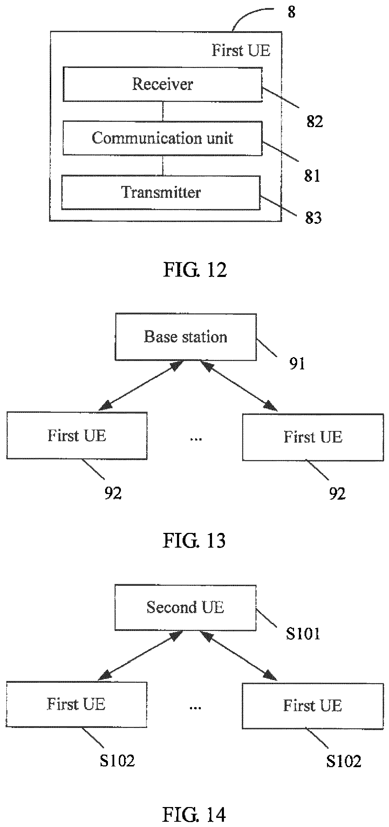

Exemplarily, as shown in FIG. 12, the first UE 8 includes a communication unit 81, a receiver 82, and a transmitter 83.

The communication unit 81 is configured to communicate with an external device.

The receiver 82 is configured to receive, by using the communication unit 81, a first reference signal sent by a communication device, where first channel information of a first channel between the first UE and the communication device is estimated according to the first reference signal.

The transmitter 83 is configured to send the first channel information to the communication device by using the communication unit 81.

The transmitter 83 is further configured to send a second reference signal to the communication device by using the communication unit 81, so that the communication device estimates second channel information of a second channel between the communication device and the first UE according to the second reference signal, and performs reciprocity calibration according to the first channel information and the second channel information.

Optionally, when the communication device is a second UE, the receiver 82 is further configured to receive, by using the communication unit 81, scheduling information that is sent by a base station according to a first calibration request. The foregoing scheduling information includes an identifier of the first UE, an identifier of the second UE, and a time-frequency resource.

Optionally, when the communication device is a base station, the transmitter 83 is further configured to send a second calibration request to the base station by using the communication unit 81, and scheduling information that is sent by the base station according to the second calibration request is received. The foregoing scheduling information includes an identifier of the first UE and a time-frequency resource.

According to the first UE provided in this embodiment of the present invention, the first UE estimates first channel information of a first channel between the first UE and a communication device according to a first reference signal sent by the communication device, and feeds back the first channel information to a base station, so that the base station performs reciprocity error calibration between UEs according to the first channel information and second channel information that is of a second channel between the first UE and the communication device and is estimated according to a second reference signal reported by the first UE, thereby ensuring performance of a communications system.

Unit division of the first UE in this embodiment of the present invention is exemplary, and actually there may be multiple unit division methods to form the first UE in this embodiment of the present invention.

An embodiment of the present invention provides a communications system, and when the communications system is a base station, as shown in FIG. 13, the communications system 9 includes: a base station 91 and at least one first user equipment UE 92.

The base station 91 is configured to send a first reference signal to each first user equipment UE 92.

Any first UE 92 is configured to estimate first channel information of a first channel between the any first UE 92 and the base station 91 according to the first reference signal sent by the base station 91, and send the first channel information to the base station 91; and further configured to send a second reference signal to the base station 91.

The base station 91 is further configured to estimate second channel information of a second channel between the base station 91 and the any first UE 92 according to the received second reference signal, and perform reciprocity calibration according to the first channel information and the second channel information.

According to the communications system provided in this embodiment of the present invention, a base station receives first channel information that is of a first channel between each first UE and a communication device and is estimated by each first UE according to a first reference signal sent by the base station, and second channel information that is of a second channel between each first UE and the communication device and is estimated according to a second reference signal reported by each first UE, so as to perform reciprocity error calibration between UEs according to the foregoing first channel information and the foregoing second channel information, thereby ensuring performance of the communications system.

An embodiment of the present invention provides a communications system, and when the communications system is a second UE, as shown in FIG. 14, the communications system S10 includes: a second UE S101 and at least one first UE S102.

The second UE S101 is configured to send a first reference signal to each first user equipment UE S102.

Any first UE S102 is configured to estimate first channel information of a first channel between the any first UE S102 and the second UE S101 according to the first reference signal sent by the second UE S101, and send the first channel information to the second UE S101; and further configured to send a second reference signal to the second UE S101.

The second UE S101 is further configured to estimate second channel information of a second channel between the second UE S101 and the any first UE S102 according to the received second reference signal, and perform reciprocity calibration according to the first channel information and the second channel information.

According to the communications system provided in this embodiment of the present invention, a second UE receives first channel information that is of a first channel between each first UE and the second UE and is estimated by each first UE according to a first reference signal sent by a base station, and second channel information that is of a second channel between each first UE and the second UE and is estimated according to a second reference signal reported by each first UE, so as to perform reciprocity error calibration between UEs according to the foregoing first channel information and the foregoing second channel information, thereby ensuring performance of the communications system.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit partition is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

**Claims**

1. An method for reciprocity calibration between UEs, comprising:

   sending, by a communication device, a first reference signal to a first user equipment UE, so that the first UE estimates first channel information of a first channel between the first UE and the communication device according to the first reference signal;
   receiving the first channel information fed back by the first UE;
   receiving a second reference signal sent by the first UE;
   estimating second channel information of a second channel between the communication device and the first UE according to the second reference signal; and
   performing reciprocity calibration according to the first channel information and the second channel information.

2. The method according to claim 1, wherein when the communication device is a second UE, before the sending, by a communication device, a first reference signal to a first user equipment UE, the method further comprises:

   sending, by the second UE, a first calibration request to a base station, so that the base station sends scheduling information to the second UE and the first UE according to the first calibration request, wherein the scheduling information comprises an identifier of the first UE, an identifier of the second UE, and a time-frequency resource.

3. The method according to claim 1, wherein when the communication device is a base station, before the sending, by a communication device, a first reference signal to a first user equipment UE, the method further comprises:

   receiving, by the base station, a second calibration request sent by the first UE, and sending scheduling information to the first UE according to the second calibration request, wherein the scheduling information comprises an identifier of the first UE and a time-frequency resource.

4. The method according to any one of claims 1 to 3, wherein the performing reciprocity calibration according to the first channel information and the second channel information specifically comprises:

   adjusting a reciprocity coefficient, so that a first channel matrix corresponding to the first channel information is equal to a second channel matrix corresponding to the second channel information.

5. An method for reciprocity calibration between UEs, comprising:

   receiving, by a first user equipment UE, a first reference signal sent by a communication device, and estimating first channel information of a first channel between the first UE and the communication device according to the first reference signal;
   sending the first channel information to the communication device; and
   sending a second reference signal to the communication device, so that the communication device estimates second channel information of a second channel between the communication device and the first UE according to the second reference signal, and performs reciprocity calibration according to the first channel information and the second channel information.

6. The method according to claim 5, wherein when the communication device is a second UE, before the receiving, by a first user equipment UE, a first reference signal sent by a communication device, the method further comprises:

   receiving scheduling information that is sent by a base station according to a first calibration request sent by the second UE, wherein the scheduling information comprises an identifier of the first UE, an identifier of the second UE, and a time-frequency resource.

7. The method according to claim 5, wherein when the communication device is a base station, before the receiving, by a first user equipment UE, a first reference signal sent by a communication device, the method further comprises:

sending a second calibration request to the base station; and
receiving scheduling information that is sent by the base station according to the second calibration request, wherein the scheduling information comprises an identifier of the first UE and a time-frequency resource.

8. A communication device, comprising:

a first sending unit, configured to send a first reference signal to a first user equipment UE, so that the first UE estimates first channel information of a first channel between the first UE and the communication device according to the first reference signal;
a first receiving unit, configured to receive the first channel information fed back by the first UE;
a second receiving unit, configured to receive a second reference signal sent by the first UE;
an estimating unit, configured to estimate second channel information of a second channel between the communication device and the first UE according to the second reference signal received by the second receiving unit; and
a calibration unit, configured to perform reciprocity calibration according to the first channel information received by the first receiving unit and the second channel information estimated by the estimating unit.

9. The communication device according to claim 8, wherein when the communication device is a second UE, the communication device further comprises:

a second sending unit, configured to send a first calibration request to a base station, so that the base station sends scheduling information to the second UE and the first UE according to the first calibration request, wherein the scheduling information comprises an identifier of the first UE, an identifier of the second UE, and a time-frequency resource.

10. The communication device according to claim 8, wherein when the communication device is a base station, the communication device further comprises:

a third receiving unit, configured to receive a second calibration request sent by the first UE; and
a second sending unit, configured to send scheduling information to the first UE according to the second calibration request received by the third receiving unit, wherein the scheduling information comprises an identifier of the first UE and a time-frequency resource.

11. The communication device according to any one of claims 8 to 10, wherein the calibration unit is specifically configured to:

adjust a reciprocity coefficient, so that a first channel matrix corresponding to the first channel information is equal to a second channel matrix corresponding to the second channel information.

12. A first user equipment UE, comprising:

a first receiving unit, configured to receive a first reference signal sent by a communication device, wherein first channel information of a first channel between the first UE and the communication device is estimated according to the first reference signal;
a first sending unit, configured to send the first channel information to the communication device; and
a second sending unit, configured to send a second reference signal to the communication device, so that the communication device estimates second channel information of a second channel between the communication device and the first UE according to the second reference signal, and performs reciprocity calibration according to the first channel information and the second channel information.

13. The first UE according to claim 12, wherein when the communication device is a second UE, the first UE further comprises:

a second receiving unit, configured to receive scheduling information that is sent by a base station according to a first calibration request, wherein the scheduling information comprises an identifier of the first UE, an identifier of the second UE, and a time-frequency resource.

14. The first UE according to claim 12, wherein when the communication device is a base station, the first UE further comprises:

a third sending unit, configured to send a second calibration request to the base station; and

a second receiving unit, configured to receive scheduling information that is sent by the base station according to the second calibration request, wherein the scheduling information comprises an identifier of the first UE and a time-frequency resource.

15. A communication device, comprising:

a communication unit, configured to communicate with an external device;
a transmitter, configured to send a first reference signal to a first user equipment UE by using the communication unit, so that the first UE estimates first channel information of a first channel between the first UE and the communication device according to the first reference signal;
a receiver, configured to receive, by using the communication unit, the first channel information fed back by the first UE, wherein
the receiver is further configured to receive, by using the communication unit, a second reference signal sent by the first UE; and
a processor, configured to estimate second channel information of a second channel between the communication device and the first UE according to the second reference signal, wherein
the processor is further configured to perform reciprocity calibration according to the first channel information and the second channel information.

16. The communication device according to claim 15, wherein when the communication device is a second UE, the transmitter is further configured to send a first calibration request to a base station by using the communication unit, so that the base station sends scheduling information to the second UE and the first UE according to the first calibration request, wherein the scheduling information comprises an identifier of the first UE, an identifier of the second UE, and a time-frequency resource.

17. The communication device according to claim 15, wherein when the communication device is a base station, the receiver is further configured to receive, by using the communication unit, a second calibration request sent by the first UE, and scheduling information is sent to the first UE according to the second calibration request, wherein the scheduling information comprises an identifier of the first UE and a time-frequency resource.

18. The communication device according to any one of claims 15 to 17, wherein:

that the processor performs reciprocity calibration according to the first channel information and the second channel information is specifically configured to: adjust a reciprocity coefficient, so that a first channel matrix corresponding to the first channel information is equal to a second channel matrix corresponding to the second channel information.

19. A first user equipment UE, comprising:

a communication unit, configured to communicate with an external device;
a receiver, configured to receive, by using the communication unit, a first reference signal sent by a communication device, wherein first channel information of a first channel between the first UE and the communication device is estimated according to the first reference signal; and
a transmitter, configured to send the first channel information to the communication device by using the communication unit, wherein
the transmitter is further configured to send a second reference signal to the communication device by using the communication unit, so that the communication device estimates second channel information of a second channel between the communication device and the first UE according to the second reference signal, and performs reciprocity calibration according to the first channel information and the second channel information.

20. The first UE according to claim 19, wherein when the communication device is a second UE, the receiver is further configured to receive, by using the communication unit, scheduling information that is sent by a base station according to a first calibration request, wherein the scheduling information comprises an identifier of the first UE, an identifier of the second UE, and a time-frequency resource.

21. The first UE according to claim 19, wherein when the communication device is a base station, the transmitter is further configured to send a second calibration request to the base station by using the communication unit, and scheduling information that is sent by the base station according to the second calibration request is received, wherein the scheduling information comprises an identifier of the first UE and a time-frequency resource.

22. A communications system, comprising: a communication device and a first user equipment UE, wherein the communication device is the communication device according to any one of claims 8 to 11, and the first UE is the first UE according to any one of claims 12 to 14; or the communication device is the communication device according to any one of claims 15 to 18, and the first UE is the first UE according to any one of claims 19 to 21.

A communication device sends a first reference signal to a first user equipment UE, so that the first UE estimates first channel information of a first channel between the first UE and the communication device according to the first reference signal ⎯ 101

The communication device receives the first channel information fed back by the first UE ⎯ 102

The communication device receives a second reference signal sent by the first UE ⎯ 103

The communication device estimates second channel information of a second channel between the first UE and the communication device according to the second reference signal ⎯ 104

The communication device performs reciprocity calibration according to the first channel information and the second channel information ⎯ 105

FIG. 1

A first UE receives a first reference signal sent by a communication device, and estimates first channel information of a first channel between the first UE and the communication device according to the first reference signal ⎯ 201

The first UE sends the first channel information to the communication device ⎯ 202

The first UE sends a second reference signal to the communication device, so that the communication device estimates second channel information of a second channel between the communication device and the first UE according to the second reference signal, and performs reciprocity calibration according to the first channel information and the second channel information ⎯ 203

FIG. 2

First UE | Base station | Second UE

301. First calibration request

302. Scheduling information | 302. Scheduling information

303. First reference signal

304. Estimate first channel information

305. First channel information

306. Second reference signal

307. Estimate second channel information

308. Perform reciprocity calibration according to the first channel information and the second channel information

FIG. 3

21

| First UE (UE1) | Base station | First UE (UE2) |
|---|---|---|

401. Second calibration request → ← 401. Second calibration request

← 402. Scheduling information — — 402. Scheduling information →

← 403. First reference signal — — 403. First reference signal →

404. Estimate first channel information

404. Estimate first channel information

405. First channel information → ← 405. First channel information

← 406. Second reference signal — 406. Second reference signal →

407. Estimate second channel information

407. Estimate second channel information

408. Perform reciprocity calibration according to the first channel information and the second channel information

FIG. 4

FIG. 5

5

Communication device

Second sending unit

56a

First sending unit

51

First receiving unit

52

Second receiving unit

53

Estimating unit

54

Calibration unit

55

FIG. 6

5

Communication device

Third receiving unit

57b

Second sending unit

56b

First sending unit

51

First receiving unit

52

Second receiving unit

53

Estimating unit

54

Calibration unit

55

FIG. 7

6

First UE

First receiving unit

61

First sending unit

62

Second sending unit

63

FIG. 8

6

First UE

Second receiving unit

64a

First receiving unit

61

First sending unit

62

Second sending unit

63

FIG. 9

```
                                            6
┌──────────────────────────────────────────┐
│                            First UE        │
│   ┌──────────────────────────────┐         │
│   │     Third sending unit        │         │
│   └──────────────────────────────┘         │
│                 │                    65b    │
│   ┌──────────────────────────────┐         │
│   │    Second receiving unit      │         │
│   └──────────────────────────────┘   64b   │
│                 │                           │
│   ┌──────────────────────────────┐         │
│   │     First receiving unit      │         │
│   └──────────────────────────────┘    61   │
│                 │                           │
│   ┌──────────────────────────────┐         │
│   │      First sending unit       │         │
│   └──────────────────────────────┘    62   │
│                 │                           │
│   ┌──────────────────────────────┐         │
│   │     Second sending unit       │         │
│   └──────────────────────────────┘         │
│                                       63    │
└──────────────────────────────────────────┘
```

FIG. 10

```
                                            7
┌──────────────────────────────────────────┐
│                   Communication device     │
│   ┌──────────────────────────────┐         │
│   │         Transmitter           │         │
│   └──────────────────────────────┘    74   │
│                 │                           │
│   ┌──────────────────────────────┐         │
│   │      Communication unit       │         │
│   └──────────────────────────────┘    71   │
│                 │                           │
│   ┌──────────────────────────────┐         │
│   │          Receiver             │         │
│   └──────────────────────────────┘    73   │
│                 │                           │
│   ┌──────────────────────────────┐         │
│   │          Processor            │         │
│   └──────────────────────────────┘    72   │
└──────────────────────────────────────────┘
```

FIG. 11

8

```
┌─────────────────────────────────────┐
│                         First UE     │
│  ┌───────────────────────────────┐   │
│  │         Receiver              │   │
│  └───────────────────────────────┘   │        82
│                  │                   │
│  ┌───────────────────────────────┐   │
│  │    Communication unit         │   │
│  └───────────────────────────────┘   │        81
│                  │                   │
│  ┌───────────────────────────────┐   │
│  │        Transmitter            │   │
│  └───────────────────────────────┘   │        83
└─────────────────────────────────────┘
```

**FIG. 12**

```
        ┌──────────────┐
        │ Base station │
        └──────────────┘           91
         ↗           ↖
        ↙             ↘
┌──────────────┐         ┌──────────────┐
│   First UE   │   ...   │   First UE   │
└──────────────┘         └──────────────┘
      92                       92
```

**FIG. 13**

```
        ┌──────────────┐
        │  Second UE   │
        └──────────────┘          S101
         ↗           ↖
        ↙             ↘
┌──────────────┐         ┌──────────────┐
│   First UE   │   ...   │   First UE   │
└──────────────┘         └──────────────┘
      S102                     S102
```

**FIG. 14**

# INTERNATIONAL SEARCH REPORT

| International application No. |
| --- |
| PCT/CN2014/073575 |

## A. CLASSIFICATION OF SUBJECT MATTER

H04B 17/00 (2006.01) i; H04L 5/14 (2006.01) n

According to International Patent Classification (IPC) or to both national classification and IPC

## B. FIELDS SEARCHED

Minimum documentation searched (classification system followed by classification symbols)

H04L; H04B; H04W; H04Q 7/-

Documentation searched other than minimum documentation to the extent that such documents are included in the fields searched

Electronic data base consulted during the international search (name of data base and, where practicable, search terms used)

CPRSABS, CNABS, CNTXT, CNKI, VEN: channel, link, estimate, reciprocity, calibrate, correction, compensate

## C. DOCUMENTS CONSIDERED TO BE RELEVANT

| Category* | Citation of document, with indication, where appropriate, of the relevant passages | Relevant to claim No. |
| --- | --- | --- |
| X | CN 1910879 A (TELEFONAKTIEBOLAGET LM ERICSSON (publ)) 07 February 2007 (07.02.2007) description, page 6, the tenth paragraph to page 10, last paragraph, page 15, the second and the third paragraphs, and figures 2 to 4 and 8 | 1-22 |
| X | CN 102045123 A (BEIJING UNIVERSITY OF POSTS AND TELECOMMUNICATIONS et al.) 04 May 2011 (04.05.2011) description, paragraphs [0014] to [0038], [0051] to [0069], and figures 1-6 | 1-22 |
| A | CN 102843173 A (ZTE CORPORATION) 26 December 2012 (26.12.2012) the whole document | 1-22 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 December 2014 | 16 December 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LU, Jing Telephone No. (86-10) 62412158 |
| --- | --- |

Form PCT/ISA/210 (second sheet) (July 2009)

<table>
<tr><td colspan="2"><b>INTERNATIONAL SEARCH REPORT</b><br>Information on patent family members</td><td colspan="2">International application No.<br><br>PCT/CN2014/073575</td></tr>
</table>

| Patent Documents referred in the Report | Publication Date | Patent Family | Publication Date |
|---|---|---|---|
| CN 1910879 A | 07 February 2007 | EP 1551143 A1 | 06 July 2005 |
| | | SE 0303583 D0 | 30 December 2003 |
| | | TW I382689 B | 11 January 2013 |
| | | US 2008125109 A1 | 29 May 2008 |
| | | IN 200604140 P1 | 13 July 2007 |
| | | JP 4361938B2 | 11 November 2009 |
| | | TW 200536295 A | 01 November 2005 |
| | | JP 2007517440 A | 28 June 2007 |
| | | ES 2285553 T3 | 16 November 2007 |
| | | EP 1700438 A1 | 13 September 2006 |
| | | WO 2005064871 A1 | 14 July 2005 |
| | | DE 602004005896 D1 | 24 May 2007 |
| | | DE 602004005896 T2 | 13 December 2007 |
| | | US 7747250 B2 | 29 June 2010 |
| | | EP 1700438 B1 | 11 April 2007 |
| CN 102045123 A | 04 May 2011 | CN 102045123 B | 30 April 2014 |
| CN102843173 A | 26 December 2012 | None | |

Form PCT/ISA/210 (patent family annex) (July 2009)